# EUROPÄISCHE PATENTSCHRIFT

(11) **EP 1 527 020 B1**
(45) Veröffentlichungstag und Bekanntmachung des Hinweises auf die Patenterteilung: **03.01.2007**
(21) Anmeldenummer: 03787501.0
(22) Anmeldetag: 31.07.2003
(51) Int. Cl.: C02F 1/30

(54) **VERFAHREN UND VORRICHTUNG ZUR NACHBEHANDLUNG VON KLÄRANLAGEN-ABLAUFWÄSSERN**
METHOD AND DEVICE FOR POST-TREATING WASTE WATER FROM SEWAGE PLANTS
PROCEDE ET DISPOSITIF POUR LE POST-TRAITEMENT D'EAUX D'ECOULEMENT DE STATIONS D'EPURATION

(30) Priorität: 14.08.2002 AT 12342002
(43) Veröffentlichungstag der Anmeldung: 04.05.2005
(73) Patentinhaber: Mediscan GmbH & Co. KG, 4550 Kremsmünster (AT)
(72) Erfinder: GEHRINGER, Peter, 1030 Wien (AT); BIERBAUMER, Hans-Peter, 4532 Rohr (AT)
(74) Vertreter: Wildhack, Helmut
(86) Internationale Anmeldenummer: PCT/AT2003/000221
(87) Internationale Veröffentlichungsnummer: WO 2004/016554

(56) Entgegenhaltungen:
- EP-A- 0 931 765
- DE-A- 2 345 970
- US-A- 3 901 807
- US-A- 5 807 491

## Beschreibung

Die vorliegende Erfindung betrifft ein neues Verfahren zur Abwasser-Nachbehandlung bzw. zur Behandlung des aus einer Reinigungs- bzw. Kläranlage für kommunale Abwässer abströmenden Ablaufwassers.

In den letzten Jahren sind zunehmend subakute chronische Giftwirkungen, wie insbesondere endokrine Wirkungen, verursachende Stoffe in den Mittelpunkt des Interesses ökologischer Betrachtungen gerückt. So sind beispielsweise Untersuchungen bekannt geworden, die sich das Ziel gesetzt haben, Methoden zu entwickeln, mit deren Hilfe die Kontamination der aquatischen Umwelt mit endokrin wirksamen Substanzen festgestellt werden kann. Die aus den Untersuchungen resultierenden Erkenntnisse sollen letztlich insbesondere dem Schutz der aquatischen Lebensräume und - mit denselben innig verknüpft - der Trinkwasserressourcen dienen und somit letztendlich auch dem Menschen. Die Wirkmechanismen und die Frage, über welche Komponenten des endokrinen Systems bei wasserbewohnenden Tieren, wie insbesondere Fischen, die endokrine Wirkung vermittelt wird, sind Gegenstand laufender Forschungsprojekte, um zu Ergebnissen bezüglich der Fragestellung zu gelangen, inwieweit aus der Kontamination von Gewässern eine wirkungsrelevante Belastung aquatischer Ökosysteme, des Trinkwassers und in Folge davon eben auch anderer Lebensmittel eintreten kann, wobei nicht zuletzt die Frage bezüglich chronischer Wirkungen und Spätfolgen beim Menschen im Raum steht.

Im Zusammenhang mit den Auswirkungen von Hormonen in Wässern sei nur beispielhaft auf die Publikation von Routledge et al. (1998) "Identification of Estrogenic Chemicals in STW Effluent. 2. In Vivo Responses in Trout and Roach", Environ.Sci.Technol., 32, 1559-1565, hingewiesen, aus welcher hervorgeht, dass durch die Einleitung geklärter Abwässer aus kommunalen Kläranlagen in Flüsse, in dieselben nachweislich ausreichende Mengen an Östranen gelangen, um bei Fischen endokrintoxische Wirkungen hervorzurufen (STW = Sewage Treatment Work).

Weiters ist auf eine erst kürzlich erschienene Veröffentlichung in Water and Wastewater International, Vol. 18, p. 5 (Febr. 2003) hinzuweisen, in welcher berichtet wird, dass das dort als "endocrine disrupting" bezeichnete Östrogen in die Liste der krebserregenden Substanzen des "National Toxicology Program" der USA aufgenommen worden ist.

Eigene Untersuchungen haben das eher unerwartete Ergebnis gebracht, dass im Zuge der an sich sehr aufwändigen und intensiven Aufbereitung kommunaler Abwässer in großstädtischen Abwasserreinigungsanlagen praktisch kein oder nur ein äußerst bescheidener Abbau der (human-)endokrinwirksamen Hormone, wie insbesondere jener aus der Gruppe der Östrane, zu letztlich endokrin nicht mehr wirksamen Abbauprodukten erfolgt.

Diese Substanzen aus der Klasse der Hormone sind also, wie gefunden wurde, biologisch kaum abbaubar und verlassen daher die Abwasserreinigungsanlage im gereinigten Ablaufwasser praktisch in Konzentrationen, in denen sie nach wie vor hoch wirksam sind.

Im Hinblick auf die eingangs in ihrer Breite und Bedeutung keineswegs vollständig dargelegte und auch in ihrer Langzeitwirkung und im Hinblick auf nachteilige Synergien mit anderen im Ablaufwasser enthaltenen, ebenfalls in geringen Mengen vorliegenden Problem- und/oder Schadstoffen qualitativ und quantitativ noch kaum abschätzbare Problematik hat sich die vorliegende Erfindung die Aufgabe gestellt, ein Verfahren zu entwickeln, welches es ermöglicht, den in der Abwasserreinigungsanlage praktisch nicht erreichbaren Abbau endokrin wirksamer Substanzen in einem derselben nachgeschalteten Verfahrensschritt bzw. Nachbehandlung-Schritt bis zu einem jeweils gewünschten bzw. aus ökologischer Sicht als notwendig erachteten bzw. erwiesenen Ausmaß zu erzielen.

Gegenstand der vorliegenden Erfindung ist somit ein Verfahren der eingangs genannten Art, welches die im kennzeichnenden Teil des Anspruches 1 genannten Merkmale aufweist.

Bevor auf die Erfindung und deren Vorteile näher eingegangen wird, ist generell festzustellen, dass schon seit längerem - teilweise auch schon durchaus praxisbewährte - Verfahren zur Hebung der Qualität von "trinkwasser-nahen", also schon von vornherein ziemlich reinen und an sich - von natürlichen Wasserinhaltsstoffen abgesehen - geringe Mengen an sonstigen Inhaltsstoffen aufweisenden Wässern auf - den jeweils behördlich vorgeschriebenen Standards bzw. Vorgaben dann tatsächlich entsprechende - Trinkwasserqualität bekannt geworden sind, wobei diese Verfahren eine Behandlung der Wässer mit ionisierender Strahlung vorsehen, wobei aus Gründen der unproblematischen Steuerung und insbesondere im Hinblick auf die Möglichkeit eines einfachen "Abschaltens" der Strahlung der Einsatz von Elektronenstrahlung besonders bevorzugt ist.

Es ist auf diesem Sektor insbesondere auf die AT 392 462 C, welche den Abbau von chlorierten Ethylenen in reinen Wässern betrifft, auf die AT 405 173 C, die sich mit der Reduzierung der Gehalte an Triazin-Derivaten in derartigen Wässern beschäftigt, weiters auf die AT 407 521 C, deren Gegenstand in der Unschädlichmachung von gentoxisch wirksamen Substanzen in solchen Wässern liegt, sowie schließlich auf die AT 399 863 C hingewiesen, welche die Reduktion der Mikroorganismenzahl in für Trinkwasserzwecke vorgesehenen Wässern zum Inhalt hat.

Bei allen diesen bekannten Verfahren geht es um die Behandlung von dem "Trinkwasserstatus" nahen Wässern, also von Wässern mit oft äußerst geringen Schadstoff-Belastungen und relativ geringen Mengen an sonstigen Inhaltsstoffen, mit ionisierender Strahlung.

Allen diesen Verfahren ist gemeinsam, dass der Schadstoffabbau bzw. die Inaktivierung von Mikroorganismen durch die in Wasser durch die Einwirkung ionisierender Strahlung gebildeten Wasserradikale erfolgt. Da die so gebildeten Radikale extrem reaktionsfreudig sind, reagieren sie nicht nur in gewünschter Weise mit Schadstoffen bzw. Mikroorganismen, sondern auch mit fast allen sonst noch im Wasser vorhandenen Wasserinhaltsstoffen. Daraus folgt, dass die Effizienz des Schadstoffabbaues bzw. der Inaktivierung von Mikroorganismen durch die Einwirkung ionisierender Strahlung in hohem Maße von den im Wasser vorhandenen Wasserinhaltsstoffen und deren Konzentration bestimmt wird. Da die Konzentration dieser Inhaltsstoffe in Trinkwässern wesentlich geringer ist als in den Ablaufwässern von Kläranlagen, liegen bei der Behandlung von Trinkwasser durch ionisierende Strahlung besonders günstige Bedingungen für einen erfolgreichen Abbau gefährlicher Schadstoffe bzw. für die Inaktivierung von Mikroorganismen vor.

Zu dem durch die oben genannten vier Patentsschriften repräsentierten Stand der Technik auf dem Gebiet der Trinkwasser-Aufbereitung ist ganz besonders darauf hinzuweisen, dass dort der erfolgreiche Abbau der Schadstoffe in den damit belasteten Wässern keineswegs durch eine Behandlung der Ausgangswässer mit ionisierender Strahlung allein erzielt wird, sondem nur dadurch, dass - zusätzlich zur Einwirkung der ionisierenden Strahlung - gleichzeitig die Einbringung von Ozon in das auf Trinkwasserqualität zu bringende Wasser vorgesehen ist, um den gemäß den oben angeführten Schriften angestrebten Erfolg eines ins Gewicht fallenden, gezielten Abbaus der genannten Schadstoffe zu erreichen.

Zum technologischen Hintergrund auf dem Sektor der Abwasser-Behandlung soll weiters auf die DE 25 46 756 C hingewiesen sein, welche die Hygienisierung von kommunalen Klärschlämmen mittels Elektronenstrahlung in einer Durchflussrinne, zur Reduzierung der dort enthaltenen extrem hohen Mikroorganismen-Anzahl zum Gegenstand hat.

Gemäß dieser Patentschrift ist - offenbar auch dort aus Gründen der zu geringen Wirksamkeit der ionisierenden Strahlung allein - eine zusätzliche Einbringung von Sauerstoff in den dieser Strahlung ausgesetzten Klärschlamm vorgesehen, wobei dort die eigentliche Wirksamkeit des zusätzlich erfolgenden Sauerstoff-Eintrags dem durch die angewandte Strahlung aus diesem Sauerstoff zum Teil gebildeten Ozon zugeschrieben wird.

Eine Klärschlamm-Hygienisierung durch Bestrahlung wurde in Geiselbullach, Deutschland, bereits technisch realisiert, wobei allerdings Gammastrahlung zum Einsatz kam. Auch im Fall der Gammabestrahlung von Klärschlämmen konnte aus wirtschaftlichen Gründen auf eine zusätzliche Einbringung von Luftsauerstoff in den zu behandelnden Klärschlamm nicht verzichtet werden.

In der EP 0 031 785 A ist ein Verfahren geoffenbart, wobei jedoch darauf zu verweisen ist, dass dort ein für den positiven Erfolg wesentliches, zusätzliches Merkmal vorgesehen ist, nämlich zusätzlich zur Bestrahlung des dort zu behandelnden, gänzlich anderen flüssigen Mediums mit ionisierender Strahlung zwingend eine Beaufschlagung desselben mit Ozon in der Gasphase und/oder in mit Ozon angereichertem Wasser (Starkwasser) vorgesehen ist.

Auch gemäß US 3,901,807 A ist für die Reduktion "mikrobieller und chemischer Aktivität" in Mikroorganismen und andere Verunreinigungen enthaltenden Wässern - zusätzlich zur Bestrahlung derselben mit Elektronen hoher Energie - zwingend deren Beaufschlagung mit einem Sauerstoff in das zu behandelnde Wasser einzubringenden Gas vorgesehen.

Im Hinblick auf die sowohl bei der Verbesserung von Wässern auf Trinkwasserqualität als auch bei der Hygienisierung von Klärschlämmen als unabdingbar erkannte Notwendigkeit einer simultanen Einwirkung von ionisierender Strahlung und Ozon bzw. Sauerstoff zur Erreichung des angestrebten Zieles des Abbaus von Schadstoffen bzw. der Inaktivierung von Mikroorganismen erbrachten die oben angeführten, eingehenden Versuche mit und Untersuchungen an aus Abwasserbehandlungsanlagen kommenden Ablaufwässern folgende überraschende Erkenntnis:

Die in denselben im Nanogramm-pro-Liter-Bereich enthaltenen, vom vorangegangenen Abwasserbehandlungsprozess weitgehend unberührt gebliebenen Schadstoff-Substanzen, wie eben insbesondere die genannten Hormone - die in einer vergleichsweise äußerst hohe Gehalte an organischer Substanz, wie z.B. einen CSB-Wert von über 100 mg/L und einen TOC-Wert von 30 bis 40 mg/L, aufweisenden und erwarteterweise den größten Teil der Strahlungsenergie "verzehrenden" Matrix im Ablaufwasser vorliegen - können durch die Einwirkung ionisierender Strahlung allein und unter Verzicht auf jegliche zusätzliche simultane Einbringung von Ozon und/oder Sauerstoff und ohne irgend einen sonstigen, den Abbau organischer Substanz fördernden Zusatz sowie ohne sonstige, diesen Abbau unterstützende Maßnahme - in durchaus effektiver Weise - zu offensichtlich dann nicht mehr endokrin bzw. östrogen wirksamen Substanzen abgebaut werden.

Erstaunlicherweise wurde weiters gefunden, dass die ionisierende Strahlung, und zwar eben ohne Beihilfe von Ozon und/oder Sauerstoff, bei der jeweils zur Reduzierung der im jeweiligen Ablaufwasser vorliegenden Hormon-Gehalte eingesetzten Strahlungsdosis - ohne Beeinträchtigung des ja in erster Linie angestrebten Hormonabbaus - auch die Zahl der Mikroorganismen, insbesondere aus der Gruppe der coliformen Bakterien, im Ablaufwasser in beachtlichem Maße zu reduzieren imstande ist.

Was die für einen effektiven Abbau der Hormone in den Ablaufwasser-Flüssigkeitskörper günstigerweise einzubringende Strahlungsdosis - wie gefunden wurde, im Wesentlichen unabhängig von der Art der Strahlung - betrifft, so sind dem **Anspruch 2** vom Standpunkt der Wirtschaftlichkeit her zu bevorzugende Bereiche der anzuwendenden Strahlungsdosis zu entnehmen. Bei Anwendung dieser Strahlungsdosen kann ein Hormonabbau im Ausmaß von bis zu drei Größenordnungen erzielt werden. Im Falle des Einsatzes von Elektronenstrahlung bieten sich für die genannten Dosis-Werte Elektronenbeschleuniger in einem Energiebereich von 0,5 bis 5 MeV besonders an.

Bei einem Vorgehen gemäß diesem Anspruch lässt sich bei Anwendung der dort genannten Strahlungsdosen ein Hormonabbau bis unter die heute erreichbare analytische Nachweisgrenze erreichen.

Der Gegenstand des **Anspruches 3** betrifft die im Rahmen der Erfindung simultan erzielte, unerwartet hohe Mikroorganismen-Inaktivierung, deren Ausmaß durchaus im Bereich von 2 bis 5 Zehnerpotenzen liegen kann, wobei durch diese Inaktivierung die Effizienz des Hormonabbaus, wie schon oben erwähnt, überraschenderweise nicht beeinträchtigt wird.

Prinzipiell ist es - wie dem **Anspruch 4** zu entnehmen - günstig, für eine Art intensiven Austausch der der Strahlungsquelle näheren Volums-Schichten des deren Feld bzw. Strahlungskegel durchlaufenden Flüssigkeitskörpers mit den von der Strahlungsquelle weiter entfernten bzw. äußeren Schichten desselben Sorge zu tragen.

Es hat sich im Sinne einer - in Anbetracht der äußerst geringen Menge der abzubauenden Hormone bei gleichzeitiger Anwesenheit großer Mengen an Matrixstoffen im Ablaufwasser - möglichst multilateralen Exposition des Ablaufwassers gegenüber der Strahlung als günstig erwiesen, für eine turbulente Strömung im Ablaufwasser-Flüssigkeitskörper Sorge zu tragen, wozu im Detail auf den **Anspruch 5** verwiesen sei.

Der **Anspruch 6** gibt an, welche Form der Flüssigkeitskörper im Falle des Einsatzes von Elektronenstrahlung für die Erreichung optimaler Ergebnisse der Hormonreduktion günstigerweise aufweisen soll.

Im Falle des Einsatzes von Elektronenstrahlung hat es sich zur Vermeidung von Strahlungsverlusten, die bei Einsatz einer mit einem Strahlungsfenster ausgestatteten, geschlossenen Strahlungseinwirkungs-Kammer eintreten, als vorteilhaft erwiesen, mit einer zur Strahlungsquelle hin kein solches Fenster aufweisenden Kammer zu arbeiten, wie dem **Anspruch 7** zu entnehmen.

Anhand der folgenden Beispiele wird die Erfindung näher erläutert:

### Beispiel 1:

Für die in diesem Beispiel beschriebenen Untersuchungen wurde ein nach stärkeren Regenfällen anfallendes Ablaufwasser aus einer kommunalen Kläranlage eingesetzt, das folgende Kenndaten aufwies:

| | |
|---|---|
| CSB 124 mg/L; | TOC 37 mg/L; |
| BSB₅ 41 mg/L; | TSS 44 mg/L; |
| Total-N 38 mg/L; | Total-P 2,4 mg/L |

Außerdem enthielt dieses Ablaufwasser Östrane in folgenden Konzentrationen:

| | |
|---|---|
| Östron 20 ng/L; | 17a-Östradiol 2,6 ng/L; |
| 17b-Östradiol 2,3 ng/L; Ethinylöstradiol 4,2 ng/L | Östriol 24 ng/L; |

Darüber hinaus enthielt dieses Wasser noch erhebliche Mengen an coliformen Bakterien, und zwar:
930 000/100 ml Gesamtcoliforme;
480 000/100 ml Fäkalcoliforme und
346 590/100 ml E.coli.

Dieses Wasser wurde sowohl einer Elektronenbestrahlungs- als auch einer Gammabestrahlungsbehandlung unterworfen. Für die Elektronenbestrahlung wurde eine im Forschungszentrum Seibersdorf befindliche Laboranlage verwendet, die es ermöglichte, die Schichtdicke des die flachprismatische Bestrahlungskammer durchströmenden Ablaufwassers zwischen 1 und 3 mm zu variieren. Auf den Boden der Bestrahlungskammer sind bei der 3 mm-Schichthöhen-Anordnung Drähte in Fischgrät-Anordnung aufgeschweißt, um die Turbulenz zu erhöhen.

Der Elektronenbeschleuniger, der 500 keV-Elektronen liefert, wurde mit Stromstärken zwischen 2 und 8 mA betrieben, um die erforderlichen Strahlendosen, wie aus der folgenden Ergebnistabelle ersichtlich, zu applizieren.

Für die Bestrahlung des Ablaufwassers mit Gammastrahlung wurde eine Kobalt-60 Gammacell 220 der Fa. Nordion, Canada, mit einer Dosisleistung von etwa 0,9 Gy/s eingesetzt.

Die Untersuchung des Ablaufwassers vor und nach der Einwirkung der jeweiligen Strahlung wurde in den Laboratorien des Umweltbundesamtes in Wien durchgeführt, wobei wie folgt vorgegangen wurde:
Jeweils 0,1 L Proben des Ablaufwassers wurden mit isotopenmarkierten Standards für jeden Analyten dotiert, mittels Flüssig-Flüssig-Extraktion gereinigt, und über C18-Festphase wurden die Analyten angereichert. Nach säulenchromatographischer Reinigung (NH2-Phase) und der Derivatisierung mit N-Methyl-N-trimethylsilyltrifluoracetamid (MSTFA) wurden die Proben mittels Gaschromatographie/High resolution-Massenspektrometrie (GC/HRMS) bei einer Auflösung von 8000 gemessen.

Die Ergebnisse der Reduzierung der Hormongehalte im Ablaufwasser durch die Einwirkung von Elektronen- sowie Gammastrahlung verschiedener Dosis zeigt die folgende Tabelle1:

**TABELLE 1**

| **Bestrahlungsverfahren** | **Dosis Gy** | **Konzentration in ng/L im Ablaufwasser** | | | | | **Keim·Anzaht in 100 ml** | | |
|---|---|---|---|---|---|---|---|---|---|
| | | Östron | 17a- Östradiol | 17b-Östradiol | Östriol | 17a-Ethinylöstradiol | Gesamt-coliforme | Fäkal-coliforme | E-coli |
| 500 keV Elektronen, | 0 | 20 | 2,6 | 2,3 | 24 | 4,2 | 930 000 | 480 000 | 346 590 |
| Wasserschicht 1 mm | 250 | - | - | - | - | - | 240 000 | 24 000 | 76 830 |
| | 500 | 12 | 0,9 | 0,3 | 14 | 1,4 | 4800 | 4800 | 8720 |
| | 750 | - | - | - | - | - | 930 | 480 | 1 270 |
| | 1000 | 5,9 | 0,6 | 0,4 | 8,1 | n.n. | 48 | 150 | 610 |
| | 2000 | 1,7 | 0,6 | < 0,3 | n.n. | n.n. | - | - | - |
| | 5000 | < 0,3 | n.n. | n.n. | n.n. | n.n. | - | - | - |
| 500 keV Elektronen, | 0 | 20 | 2,6 | 2,3 | 24 | 4,2 | | | |
| Wasserschicht 3 mm | 250 | - | - | - | - | - | | | |
| | 500 | 12 | 1 | 0,3 | 15 | 1,6 | | | |
| | 750 | - | - | - | - | - | | | |
| | 1000 | 6,2 | 0,6 | 0,4 | 9,1 | n.n. | | | |
| | 2000 | 1,9 | 0,6 | n.n. | n.n. | n.n. | | | |
| | 5000 | n.n. | n.n. | n.n. | n.n. | n.n. | | | |
| Gammacell | 0 | 20 | 2,6 | 2,3 | 24 | 4,2 | 930 000 | 460 000 | n.b. |
| | 250 | - | - | - | - | - | 240 000 | 93000 | n.b. |
| | 500 | 10 | 1 | 0,4 | 15 | 1,6 | 4800 | 9300 | 13.864 |
| | 750 | - | - | - | - | - | 2400 | 930 | 7 101 |
| | 1000 | 4,5 | 0,6 | 0,4 | 8,2 | n.n. | 240 | 240 | 720 |
| | 2000 | n.n. | n.n. | n.n. | n.n. | n.n. | - | - | |
| | 5000 | n.n. | n.n. | n.n. | n.n. | n.n. | | | |

| | | | | | | | | | |
|---|---|---|---|---|---|---|---|---|---|
| n.n.: nicht nachweisbar n.b.: nicht bestimmt | | | | | | | | | |

### Beispiel 2:

Proben des Ablaufwassers aus der gleichen kommunalen Kläranlage wie in Beispiel 1, entnommen während einer Schönwetterperiode, wurden nach einer wie im Beispiel 1 beschriebenen Elektronenbestrahlung mit verschieden hohen Dosen im Fraunhofer-Institut Molekularbiologie und Angewandte Oekologie in Schmallenberg (BRD) chemisch-analytisch und bioanalytisch untersucht, wie im Folgenden näher beschrieben:
a) Chemische Analytik:
   Filtration der gesamten Proben durch Glasfaserfilter;
   Aliquotierung von je 0,5 L Probe und Zudotierung des Internen Standards (IS);
   SPE-Extraktion an Macherey-Nagel CHROMAbOND C18;
   Reinigung der Extrakte an aktiviertem Kieselgel;
   Derivatisierung (Silylierung) mit N-Methyl-N-trimethylsilyltrifluoracetamid (MSTFA);
   Messung mittels lonTrap-GC/MSIMS;
   Quantifizierung mittels Standardadditionsverfahren auf vier Konzentrationsstufen (Matrixkalibrierung mit unbestrahlter Probe).
b) Bioanalytik:
   Nachweis der östrogenen Aktivität mittels Hefe-Östrogenrezeptor-Test:
      Probenaufarbeitung:
         Filtration der gesamten Proben durch Glasfaserfilter;
         SPE-Extraktion von 1 L Probe an Macherey-Nagel CHROMABOND C18;
         Elution mit Aceton; Einengen im Vakuum
         Lösen des Rückstandes in 2 mL Ethanol.
   Hefe-Östrooen rezeptor-Test:
      Testorganismus:
         Gentechnisch veränderter Hefestamm (Saccharomyces cerevisiae), entwickelt von der Firma GLAXO Research and Development Limited. Der Stamm enthält die DNA-Sequenz des humanen Östrogenrezeptors (Cup-hER), das Expressionsplasid ERE und das Reportergen lac-Z für die β-Gataktosidase, durch dessen Aktivität ein roter Farbstoff gebildet wird.
      Durchführung:
         nach Routledge and Sumpter (Environ.Toxicol. Chem. 15(3), 241-248, 1996) in der Modifikation von De Boever et al. (2001), Environ Health Perspect 109: 691-69). Pro Probenextrakt wurden zwei Testreihen durchgeführt. Es wurde jeweils eine Effektkurve mit 17α-Ethinylestradiol aufgenommen. Von den Probenextrakten wurden zwischen 10 und 70 µl in den Hefe-Test eingesetzt.
         Die Extinktion der Enzymaktivität (540 nm) wurde um die Trübung (620 nm) korrigiert (E540/E620) und auf den Blindwert bezogen (Quotient Blindwert = 1). Die so erhaltenen Werte wurden als "relative Aktivität" bezeichnet.
         Testansätze, deren Zelldichten bei Testende geringer als die der Negativkontrollen (Blank) waren, galten als zytotoxisch und wurden nicht ausgewertet.
         Die in den Proben enthaltenen Ethinylestradiol-Equivalente wurden für relative Aktivitäten, die im Bereich einer entsprechenden Kalibriergeraden lagen, und die dabei erhaltenen Ergebnisse werden in Form semiquantitativer Aktivitätswerte (+++++: hoch östrogenaktiv, bis +: sehr gering östrogenaktiv; nd: nicht detektierbar, nb: nicht bestimmt) angegeben.

Die folgende Tabelle 2 gibt die Ergebnisse der chemisch-analytischen und der bioanalytischen Untersuchungen wieder:

**Tabelle 2:**

| **Elektronenstr. 3 mm Schichtdicke** | | **Konzentration (chem.-analyt.) ng/L im Ablaufwasser** | | | | | **relative Östrogen-Aktivität** |
|---|---|---|---|---|---|---|---|
| | | Östrogen | 17a-Östradiol | 17b-Östradiol | Östriol | 17a-Ethinyöstradiol | |
| | 0 | 110 | 32 | 6,6 | nb | 20 | +++++ |
| | 1000 | nd | nd | nd | nb | nd | + |
| | 2000 | nd | nd | nd | nb | nd | 0 |
| | 3000 | nd | nd | nd | nb | nd | 0 |

## Patentansprüche

1. Verfahren zur Abwasser-Nachbehandlung bzw. zur Behandlung des aus einer Reinigungs- bzw. Kläranlage für kommunale Abwässer abströmenden Ablaufwassers,
**dadurch gekennzeichnet,**
**dass** in dem Strom des die Abwasser-Reinigungs- bzw. -Kläranlage verlassenden Abwassers durch Führen desselben in Form eines kontinuierlichen Flüssigkeitskörpers allein durch das Feld bzw. durch den Strahlungskegel mindestens einer ionisierende Strahlung aus der Gruppe Gamma- und Elektronenstrahlung abgebenden Strahlungsquelle und unter Verzicht auf zusätzliche Einbringung von **Ozon und/oder Sauerstoff** der Gehalt dieses Ablaufwasserstroms an endokrin wirksamen und für die aquatische Umwelt bedenklichen Hormonen bzw. Hormon-Metaboliten aus der Gruppe der Östrane, insbesondere der Östrogene, reduziert wird.

2. Verfahren nach Anspruch 1, **dadurch gekennzeichnet, dass** durch Beaufschlagung des das Strahlungsfeld durchlaufenden Flüssigkeitskörpers des Ablaufwasserstroms mit ursprünglich vorhandenen Gesamt-Gehalten an Hormonen aus der Gruppe der Östrane von bis zu 250 ng/L mit einer Strahlungsdosis von 300 bis 5000 Gy, vorzugsweise von 500 bis 3000 Gy, und insbesondere von 500 bis 2500 Gy, der Gesamtgehalt des Flüssigkeitskörpers an diesen Hormonen auf mittels bioanalytischen Tests, insbesondere mittels Hefe-Östrogenrezeptor-Tests, nicht mehr nachweisbare Östrogen-Aktivitätswerte gesenkt wird.

3. Verfahren nach einem der Ansprüche 1 oder 2, **dadurch gekennzeichnet, dass** - bei Beaufschlagung des Ablaufwasserstroms mit im Wesentlichen jeweils gleichbleibender, innerhalb der im Anspruch 2 genannten Grenzen liegenden Strahlungs-Dosis simultan mit der Reduzierung des Gehaltes des Ablaufwassers an Hormonen der Östran-Gruppe der Gehalt dieses Ablaufwassers an coliformen Bakterien um zumindest eine Zehnerpotenz reduziert wird.

4. Verfahren nach einem der Ansprüche 1 bis 3, **dadurch gekennzeichnet, dass** in dem das Strahlungsfeld durchlaufenden Flüssigkeitskörper des Ablaufwasserstroms im Einwirkungsbereich der ionisierenden Strahlung der der Strahlungsquelle zugekehrte Volumsbereich des Flüssigkeitskörpers mit hohem Durchmischungsgrad mit dem der Strahlungsquelle abgekehrten Volumsbereich desselben gemischt wird.

5. Verfahren nach einem der Ansprüche 1 bis 4, **dadurch gekennzeichnet, dass** in dem das Strahlungsfeld durchlaufenden Flüssigkeitskörper des Ablaufwasserstroms im Einwirkungsbereich der ionisierenden Strahlung mittels turbulenz-generierenden Einbauten in einer den Flüssigkeitskörper definierenden Durchfluss-Zelle und/oder mittels zumindest einem in demselben bzw. in derselben angeordneten, bevorzugterweise berührungslos angetriebenen, rotierenden Rührkörper Turbulenz generiert wird.

6. Verfahren nach einem der Ansprüche 1 bis 5, **dadurch gekennzeichnet, dass** im Falle des Einsatzes von Elektronen-Strahlung der Ablaufwasserstrom in die Form eines den Strahlungskegel des Elektronenbeschleunigers quer, bevorzugt im Wesentlichen senkrecht, zur Strahlungsrichtung durchlaufenden, schichtartig flachen Flüssigkeitskörpers gebracht wird.

7. Verfahren nach einem der Ansprüche 1 bis 6, **dadurch gekennzeichnet, dass** der Flüssigkeitskörper des Ablaufwasserstroms durch den Einwirkungsbereich der Strahlung mit zur Strahlungsquelle bzw. zu den Strahlungsquellen hin freier Flüssigkeits-Oberfläche bewegt bzw. geführt wird.

## Claims

1. Method for wastewater post-treatment or for the treatment of discharge water released from a sewage treatment or purification plant for municipal sewage, **characterised in that** the content of endocrine-disrupting hormones and hormones presenting a risk to aquatic environments or hormone metabolites from the group of oestranes, in particular oestrogens, is reduced in the flow of discharge water leaving the sewage treatment or purification plant solely by guiding same in the form of a continuous fluid body through the field or radiation cone of at least one radiation source emitting ionising radiation from the group consisting of gamma and electron radiation and dispensing with any additional introduction of ozone and/or oxygen.

2. Method according to claim 1, **characterised in that** by exposing the fluid body passing through the field of radiation of the discharge water flow with original total contents of hormones from the group of oestranes of up to 250 ng/l to a radiation dose of 300 to 5000 Gy, preferably from 500 to 3000 Gy, and in particular from 500 to 3000 Gy, the total hormone content of the fluid body is reduced to oestrogen activity values that can no longer be detected by bioanalytical tests, in particular with yeast-oestrogen receptor tests.

3. Method according to either claim 1 or claim 2, **characterised in that** by exposing the discharge water flow to a substantially constant radiation dose falling within the limits specified in claim 2, the coliform bacteria content of said discharge water is reduced by at least one power of ten simultaneously with a reduction in the content of hormones belonging to the oestrane group in the discharge water.

4. Method according to any one of claims 1 to 3, **characterised in that** a partial volume of the fluid body close to the source of radiation is thoroughly mixed with a partial volume more distant from the radiation source in the fluid body of the discharge water flow passing through the radiation field in an effective area of the ionising radiation.

5. Method according to any one of claims 1 to 4, **characterised in that** in the fluid body of the discharge water flow passing through the radiation field in an effective area of the ionising radiation turbulence is created by means of turbulence-generating fittings in a through-flow cell defining the fluid body and/or by means of at least one rotating body installed in same, preferably operated by a non-contact drive system.

6. Method according to any one of the claims 1 to 5, **characterised in that**, if electron radiation is used, the discharge water flow assumes the form of a flat stratified fluid body passing through the radiation cone of the electron accelerator transversely, preferably substantially perpendicularly to the direction of the radiation.

7. Method according to any one of claims 1 to 6, **characterised in that** the discharge water fluid body is moved or guided through an effective area of the radiation with a fluid surface that is unobstructed towards the radiation source(s).

## Revendications

1. Procédé de retraitement d'eaux usées ou de traitement de l'eau qui s'écoule d'une installation d'épuration ou de décantation d'eaux usées communales, **caractérisé en ce que**, en faisant passer le flux des eaux usées qui sortent de l'installation d'épuration ou de décantation d'eaux usées sous la forme d'un corps liquide continu uniquement dans le champ ou dans le cône de rayonnement d'au moins une source de rayonnement ionisant du groupe des sources de rayonnement délivrant des rayons gamma et des faisceaux d'électrons et sans y introduire d'ozone et/ou d'oxygène supplémentaire, la teneur de ce flux d'eau d'écoulement en hormones ou métabolites d'hormones du groupe des oestranes, en particulier des oestrogènes, ayant une action endocrine et nuisibles pour le milieu aquatique est réduite.

2. Procédé selon la revendication 1, **caractérisé en ce que**, en exposant le corps liquide du flux d'eau d'écoulement qui traverse le champ de rayonnement avec des teneurs totales initialement présentes en hormones du groupe des oestranes allant jusqu'à 250 ng/l à une dose de rayonnement de 300 à 5000 Gy, de préférence de 500 à 3000 Gy et en particulier de 500 à 2500 Gy, la teneur totale de ces hormones dans le corps liquide est abaissée à des valeurs d'activité des oestrogènes qui ne peuvent plus être mesurées par des tests bioanalytiques, en particulier par des tests à base de récepteurs d'oestrogènes sur des levures.

3. Procédé selon l'une des revendications 1 ou 2, **caractérisé en ce que**, en exposant le flux d'eau d'écoulement à une dose de rayonnement qui reste toujours sensiblement constante à l'intérieur des limites indiquées dans la revendication 2, la teneur de l'eau d'écoulement en bactéries coliformes est réduite d'au moins une puissance de dix concomitamment à la réduction de la teneur de cette eau d'écoulement en hormones du groupe des oestranes.

4. Procédé selon l'une des revendications 1 à 3, **caractérisé en ce que**, dans le corps liquide du flux d'eau d'écoulement qui traverse le champ de rayonnement, la région du volume du corps liquide tournée vers la source de rayonnement est mélangée avec un degré de mélangeage élevé avec la région du volume dudit corps liquide opposée à la source de rayonnement dans la zone d'action du rayonnement ionisant.

5. Procédé selon l'une des revendications 1 à 4, **caractérisé en ce que**, dans le corps liquide du flux d'eau découlement qui traverse le champ de rayonnement, une turbulence est générée dans la zone d'action du rayonnement ionisant au moyen de chicanes génératrices de turbulences dans une cellule d'écoulement définissant le corps liquide et/ou au moyen d'au moins un élément agitateur rotatif disposé dans celle-ci ou celui-ci, de préférence entraîné sans contact.

6. Procédé selon l'une des revendications 1 à 5, **caractérisé en ce que**, lorsqu'un faisceau d'électrons est utilisé, le flux d'eau d'écoulement est amené sous la forme d'un corps liquide plat de type couche qui traverse le cône de rayonnement de l'accélérateur d'électrons transversalement, de préférence sensiblement perpendiculairement à la direction du rayonnement.

7. Procédé selon l'une des revendications 1 à 6, **caractérisé en ce que** le corps liquide du flux d'eau découlement est déplacé ou guidé dans la zone d'action du rayonnement avec une surface de liquide libre en direction de la source de rayonnement ou des sources de rayonnement.
